# EUROPÄISCHE PATENTSCHRIFT

(11) **EP 1 244 573 B1**
(45) Veröffentlichungstag und Bekanntmachung des Hinweises auf die Patenterteilung: **30.06.2004**
(21) Anmeldenummer: 00993776.4
(22) Anmeldetag: 16.12.2000
(51) Int. Cl.: B60R 13/01

(54) **VORRICHTUNG ZUM UMRÜSTEN EINES PKWS, VANS ODER KLEINBUSSES IN EINEM ROBUSTEN ALLZWECKTRANSPORTER**
DEVICE TO CONVERT A PASSENGER VEHICLE, VAN OR MINIBUS INTO A ROBUST GENERAL-PURPOSE TRANSPORT VEHICLE
DISPOSITIF POUR CONVERTIR UNE VOITURE DE TOURISME, UNE FOURGONNETTE OU UN MINIBUS EN UTILITAIRE UNIVERSEL ROBUSTE

(30) Priorität: 23.12.1999 DE 19962490; 05.04.2000 DE 10016946
(43) Veröffentlichungstag der Anmeldung: 02.10.2002
(73) Patentinhaber: Keles, Annette, 71522 Backnang (DE)
(72) Erfinder: Keles, Annette, 71522 Backnang (DE)
(86) Internationale Anmeldenummer: PCT/DE2000/004520
(87) Internationale Veröffentlichungsnummer: WO 2001/051316

(56) Entgegenhaltungen:
- FR-A- 2 001 328
- GB-A- 2 115 754
- US-A- 4 461 402
- US-A- 4 736 762
- US-A- 4 877 281
- US-A- 4 917 431
- US-A- 5 378 034
- US-A- 5 570 921

## Beschreibung

Die Erfindung betrifft eine Vorrichtung zum Umrüsten eines Fahrzeuginnenraums gemäß dem Oberbegriff des Patentanspruchs 1.

Aus der US-A-4,877,281 ist eine Solche gattungsgemäße Vorrichtung für den Transport von Gütern bekannt, mit einer Verkleidung, die zumindest einen Boden und zwei Seitenteile umfasst und zusammenfaltbar ist, wobei die Seitenteile im Einsatzzustand der Verkleidung etwa senkrecht zum Boden stehen.

Die Erfindung betrifft eine Vorrichtung mit den Merkmalen des Auspruchs 1 in Form eines Containers der eine reversible Umrüstung eines Personenkraftwagens, VANs oder Kleinbusses in einen robusten Allzwecktransporter ermöglicht. Die Benutzung eines solchen Fahrzeugs als Allzwecktransporter erfolgt dadurch, daß der gesamte Fahrzeuginnenraum, der für den Transport verfügbar ist, hermetisch abgekapselt wird, so daß von dem abgekapselten Raum kein Schmutz oder Staub in den Rest des Fahrzeugs entweichen kann. Durch die Anwendung einer speziellen, an die Wageninnenkonturen angepaßten Mechanik und Kinematik wird das Fahrzeug in wenigen Zehnsekunden für allgemeine Transportaufgaben verfügbar gemacht.

Durch hermetische Abkapselung des gesamten Laderaums wird ein erweitertes bzw. neues Nutzenpotential für PKWs, Kombi-Fahrzeuge, Vans, Kleinbusse und Mehrzweckfahrzeuge (MPVs) erzeugt, wodurch die Fahrzeuge in robuste Allzwecktransporter umgewandelt werden. Durch die Erfindung kann ein Fahrzeug der genannten Typen, das hauptsächlich zur Personenbeförderung bestimmt ist, zum robusten Einsatz herangezogen werden, ohne der Gefahr ausgesetzt zu sein, verschmutzt und beschädigt zu werden, sowohl für die Entsorgung und den Transport von Gütern wie nasse, schmutzige und voluminöse Gegenstände, Baumaterial, Schutt, Erde, Holz als auch zu Aufbewahrung und Transport von Werkzeugen, kleinen Maschinen, Kisten, Arbeitsmaterial (einschl. fetthaltiger, öliger und chemischer Stoffe).

Für solche Bedarfsfälle werden in der Regel Fahrzeuge mit Pkw-Anhängern eingesetzt, die mit einer Anhängerkupplung ausgerüstet sind oder spezielle, zum Transport bestimmte Fahrzeuge wie Kastenwagen und Transporter. Daher übernimmt die Erfindung weitgehend die Aufgaben der Pkw-Anhänger, die wegen ihrer Unhandlichkeit nur zögerlich eingesetzt werden sowie teilweise die der Transporter und Kastenwagen.

Zum Einsatz kommt ein speziell für die genannten Aufgaben entwickelter neuer Verbundwerkstoff, der robust und außergewöhnlich leicht ist und sich durch besondere Steifigkeit dennoch hohe Elastizität, hohe Abriebfestigkeit sowie außergewöhnliches Energieabsorbtionsvermögen auszeichnet. Dank dieses hohen Energieabsorbtionsvermögens des verwendeten Materials werden zusätzlich zum Schutz gegen Verschmutzung des Fahrzeuginnenraums Gefahrenquellen und Gefährdungspotentiale, die beim Transport von schweren und sperrigen Gegenständen in alle Richtungen auftreten können, vermindert bzw. ganz aufgehoben. Außerdem bekommt neben den Fahrzeuginnenwänden auch die Fahrzeugheckklappe einen zuverlässigen Schutz.

Die Umrüstung eines Fahrzeugs in einen Allzwecktransporter sowie die Rückwandlung in den Ausgangszustand kann, wie an verschiedenen Prototypen in der praktischen Anwendung nachgewiesen werden konnte, durch eine Person, Mann oder Frau, mit wenigen Handgriffen innerhalb von einigen 10 Sekunden erfolgen.

Die Realisierung der Erfindung kann in vielfältiger Art erfolgen. Der Container kann aus Komponenten zusammengesetzt und faltbar ausgeführt werden. Die Komponenten können miteinander permanent oder abnehmbar verbunden sein. Die Verbindung der Komponenten kann nach diversen Methoden und Techniken erfolgen. Man kann beispielsweise ein großes Teil durch Erzeugung von Faltlinien in Unterkomponenten aufteilen, wobei sie weiterhin integraler Bestandteil des ursprünglichen Teils bleiben oder man kann diskrete Teile mit Klebebändern miteinander permanent verbinden und zu einer Einheit integrieren.

Bei längeren Fahrzeugen, wie Bussen z.B. FIAT Ducato ,Mercedes-Sprinter, kann der Nutzraum in Längsrichtung in Segmente aufgeteilt und deren Module miteinander flexibel oder permanent verbunden werden.

Eine flexible Umrüstung eines Personenkraftwagens insbesondere einer Kombi-Limousine, eines VANs oder Kleinbusses in einen robusten Allzwecktransporter ist dadurch gekennzeichnet, daß der gesamte zum Lastentragen verfügbare Raum des Fahrzeugs durch die Verkleidung mit einem abriebfesten Material hermetisch abgekapselt wird.

Das Verkleidungsmaterial wird durch Nutzung seiner Federkraft und Steifigkeit an die Innenwände, den Boden und die Decke des Fahrzeugs angepreßt. Die Federkraft wird dadurch erzeugt, daß das Verkleidungsmaterial unter Spannung angebracht bzw. für die Einsatzdauer unter Spannung gehalten wird.

Der Verkleidungsgegenstand besteht aus demontierbaren oder permanent zusammengesetzten Komponenten.

Der Verkleidungsgegenstand besteht zur hermetischen Abkapselung des Laderaums, im Falle der permanenten Zusammensetzung seiner Komponenten, aus einem zusammenfaltbaren und ausklappbaren Teil.

Zur Erzielung von besonders leichtem Material mit der erforderlichen Steifigkeit, Elastizität und der hohen Abriebfestigkeit werden Schaumstoffe wie Polyethylen, Polypropylen mit Folien wie Polyester, Hart-PVC, Polycarbonat kaschiert bzw. laminiert.

Um die Federkraft gering zu halten, werden bei einigen Materialien wie Polypropylen- oder Polycarbonatplatten gewisse Vorverformungen durchgeführt. Bei Materialien, die die erforderliche Steifigkeit und Stabilität bieten, kann auf die Federkraft des Materials verzichtet werden.

Zwei Ausführungsbeispiele, die als Prototypen gebaut und getestet wurden, sind in Zeichnungen dargestellt und werden im folgenden näher beschrieben. Bei der ersten Ausführung ist die permanente Verbindung dadurch erreicht, daß zwei große unabhängige Teile durch Thermoformung in Unterkomponente aufgeteilt werden. Danach werden diese beiden Teile verbunden, so daß ein Einzelteil entsteht. Bei der zweiten Ausführung werden diskrete Teile mittels Klebebändern miteinander verbunden und zu einer Einheit integriert.

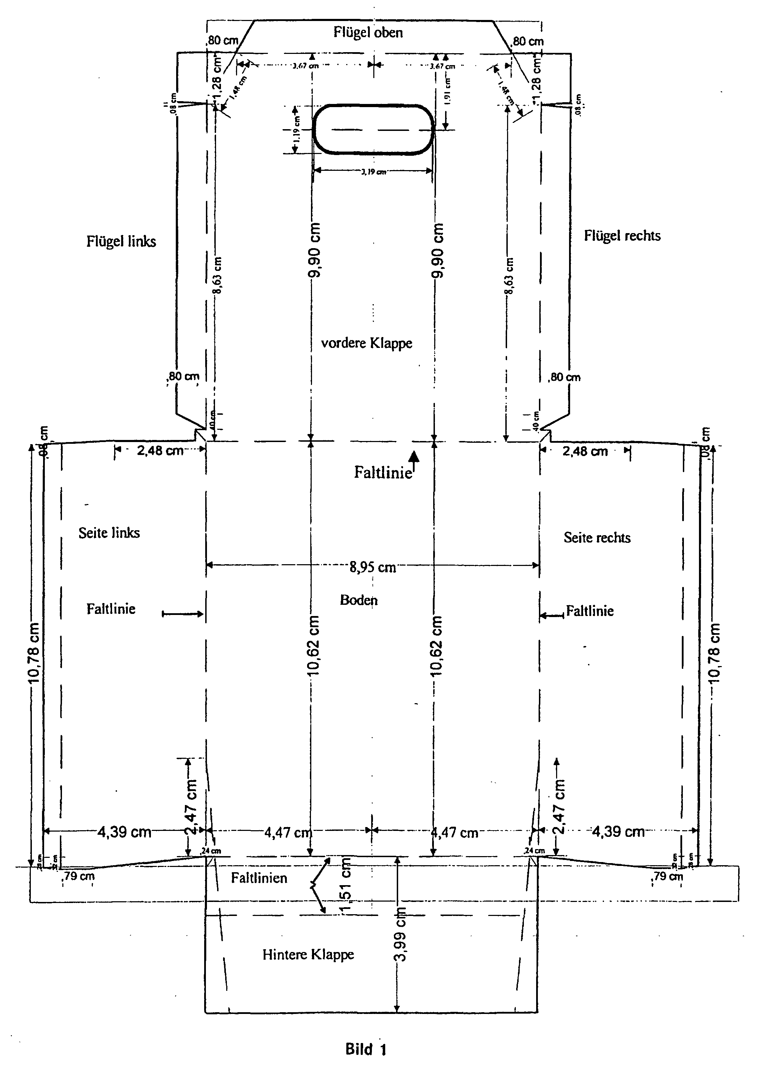

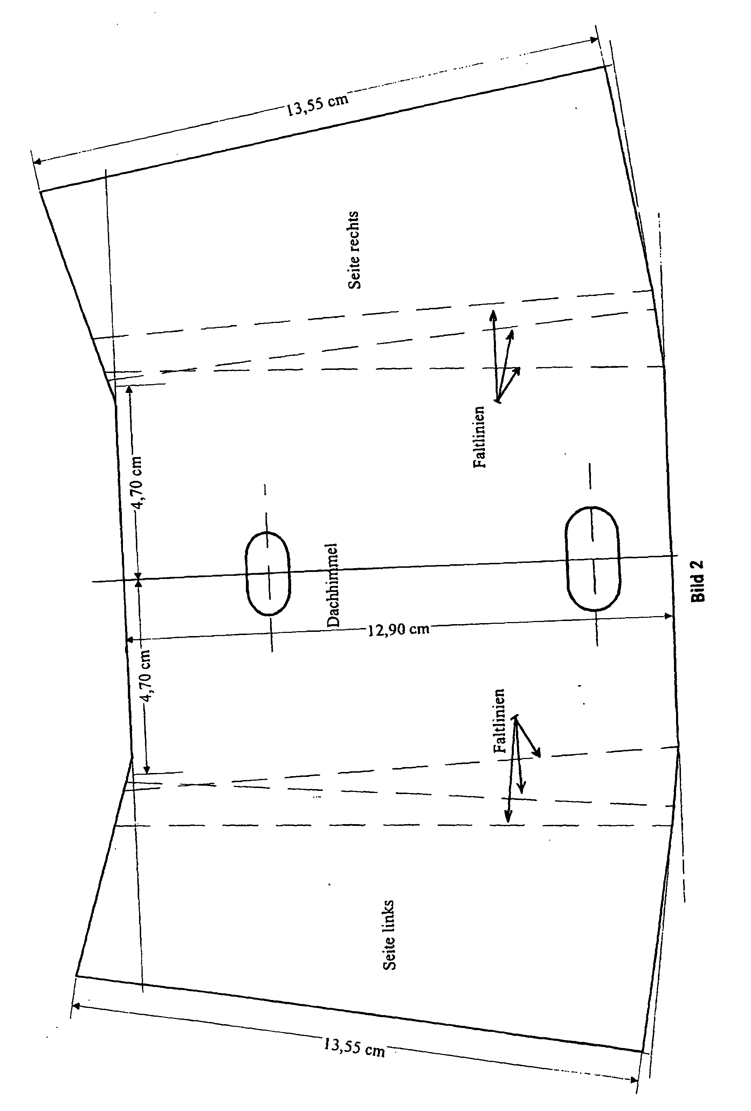

Ausführung 1: Diese Ausführung besteht aus zwei Teilen, die in einer Abkantmaschine durch Thermoformung in Unterkomponente aufgeteilt werden (Bild 1, Bild 2). Die zwei Hauptteile werden danach mit Heißschmelzklebebändern miteinander verbunden.

Die erste Hauptkomponente ( Komponente 1) beinhaltet nach der Erzeugung der Faltlinien folgende Unterkomponenten (Bild 1):
1. Boden
2. Seiten (rechts und links bis zur Hälfte vom Boden)
3. Vordere Klappe mit Flügeln (rechts, links und oben)
4. Hintere Klappe.

Die Faltlinie zwischen der linken bzw. rechten Seite und dem Boden verläuft in Längsrichtung während die Faltlinie zwischen der vorderen bzw. hinteren Klappe und dem Boden in Querrichtung verläuft. Die vordere Klappe erhält zusätzlich drei Faltlinien, wodurch drei faltbare Flügel entstehen.

Die zweite Hauptkomponente (Komponente 2) beinhaltet nach der Erzeugung der Faltlinien folgende Unterkomponenten (Bild 2):
5. Dachhimmel
6. Seiten (rechts und links bis zur Hälfte vom Dach).

Die Faltlinie zwischen der linken bzw. rechten Seite und dem Dachhimmel verläuft in Längsrichtung. Diese beiden Faltlinien sind den Faltlinien der Seiten der Komponente 1 parallel.

Die Unterkomponenten, 1 - 4 bzw. 5 - 6, entstehen durch Faltlinien, die durch Thermoformung erzeugt werden. Den Container, der hier beschrieben wird, kann man auch statt aus zwei großen aus sechs separaten, entsprechend kleineren Komponenten herstellen, die miteinander permanent verbunden werden. Die Verbindungslinien der sechs Komponenten dienen dann gleichzeitig als Faltlinien.

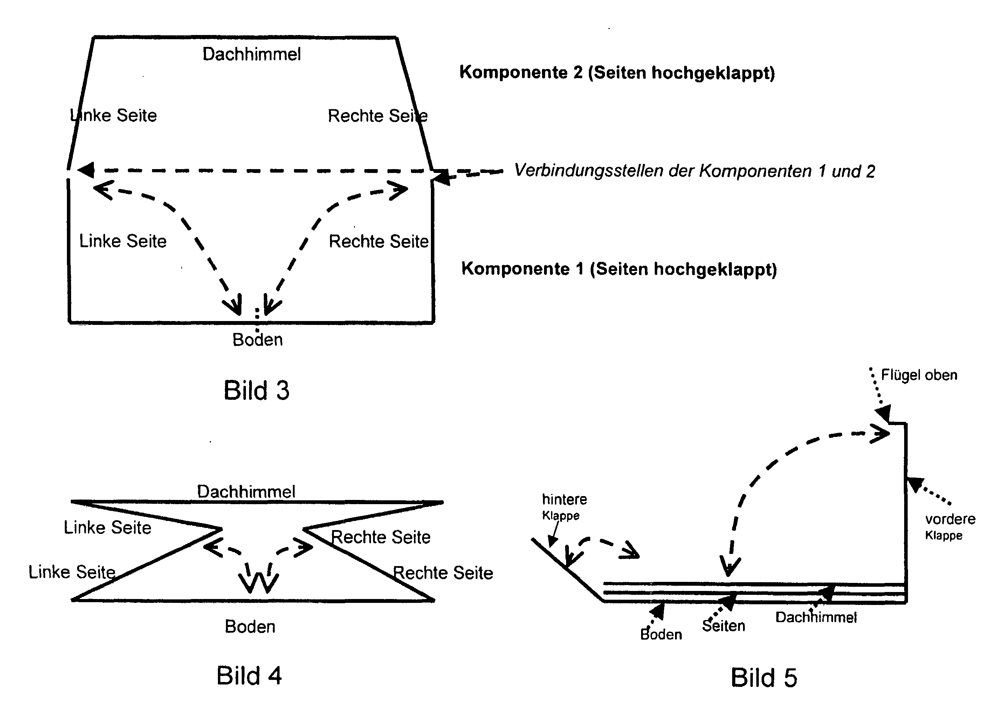

Die Komponente 1 und die Komponente 2 werden miteinander entlang der linken und rechten, jeweils dem Boden bzw. dem Dachhimmel angrenzenden Seiten mit Heißschmelzklebebändem verbunden. Diese Verbindungslinien sind zusätzliche Faltlinien, die zum Zusammenfalten der Komponente 2 auf der Komponente 1 dienen (Bild3).

Auf dem Boden (Komponente 1) werden die dazugehörigen Seitenteile um ihre Faltlinie nach innen gefaltet, so daß die rechte und linke Seite sich in der Mittellinie des Bodens treffen (Bild 4). Da die Komponente 1 und die Komponente 2 entlang ihrer Seitenteile miteinander verbunden sind, fallen die Seitenteile der Komponente 2 auf die Seitenteile der Komponente 1. Auch die rechte und linke Seite der Komponente 2 treffen sich gezwungenermaßen an der Mittellinie des Bodens (Bild 4). Der Dachhimmel, der das Bindeglied zwischen den Seitenteilen ist, liegt somit flach oben auf. Die vordere Klappe wird auf den Dachhimmel und darunter liegenden Seitenteile und Boden heruntergeklappt (Bild 5). Ähnlich kommt von hinten die kürzere, hintere Klappe und deckt den Rest ab, der durch vordere Klappe nicht bedeckt wurde.

Der zusammengefaltete Container wird in Längsrichtung von hinten in den Wagen hineingelegt. Die hintere Klappe wird zurückgeschlagen (Bild 5). Die drei Flügel der vorderen Klappe werden aufgemacht und die vordere Klappe wird aufgeklappt, so daß sie senkrecht auf dem Boden steht und bis zum Dachhimmel des Wagens reicht (Bild 5). Die Seiten, die dem Boden bzw. Dachhimmel angrenzen werden weg von der Mittellinie des Bodens hin zur Wageninnenwand gedrückt, wodurch sich der Dachhimmel nach oben abhebt und gegen den oberen Flügel der vorderen Klappe bzw. gegen das Dach des Wagens drückt (Bild 4 , Bild 5). Der Container ist nun voll entfaltet. Die zwei Seitenflügel der vorderen Klappe werden von außen auf die Seitenteile gedrückt und festgemacht. Der Allzwecktransporter ist bereit, beladen zu werden.

Ausführung 2: Diese Ausführung besteht aus einem aus mehreren Komponenten zusammengesetzten Container, wobei die Komponenten miteinander permanent derart miteinander verbunden werden, daß sie faltbar sind. Bei dieser Ausführung wurden Heißschmelzklebebänder (Hotmelt) zum Verbinden der Komponenten verwendet.

Die Komponenten, aus denen ein Container zusammengebaut wird, sind:
1. Boden
2. Seitenteile
3. Aufbauteil (Dachhimmel)
4. Klappen (vorn und hinten)
5. Flügel (seitlich und oben)

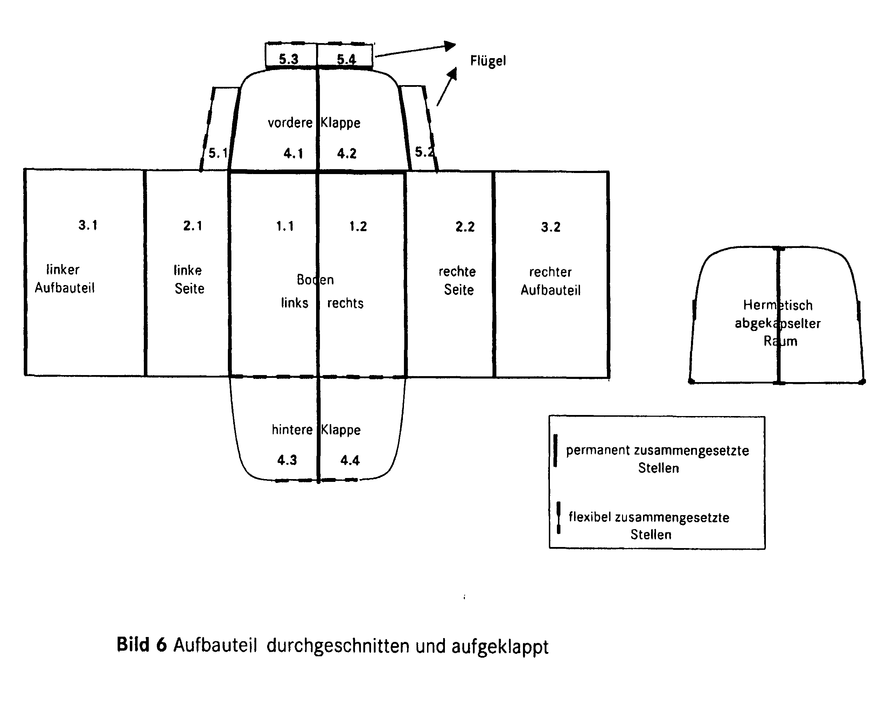

Jede dieser Komponenten wiederum kann aus einem oder mehreren Teilkomponenten bestehen. Die Komponenten der hier zu beschreibenden Ausführung haben folgende Aufteilung:
· Zweiteilige, zusammenhängende Bodengruppe (Bild 6 - 1.1; 1.2)
· Zwei einteilige Seitenteile für links und rechts (2.1; 2.2)
· Zweiteiliger zusammenhängender Aufbauteil (3.1; 3.2)
· Eine zweiteilige Klappe für vorn (4.1; 4.2) erweitert um zwei einteilige Seitenflügel für links und rechts (5.1; 5.2) und zweiteiliger Oberflügel (5.3; 5.4)
· Eine zweiteilige Klappe ohne Flügel für hinten (4.3; 4.4)

Die Bodengruppe (Bild 6 - 1.1; 1.2) besteht also aus zwei Teilen, die in der Mitte in Wagenlängsrichtung zusammengeklebt sind, so daß sie an der Schnittstelle zusammenfaltbar sind. Diese Schnittstelle, die die Mittelachse des Containerbodens bildet, überlappt sich genau mit der Mittelachse des Bodens des Fahrzeugladeraums. Alle Komponenten des Containers sind bzgl. der Mittelachse symmetrisch zueinander.

Die Seitenteile (2.1, 2.2), die im Einsatzzustand des Containers senkrecht zu der Bodengruppe (1.1; 1.2) stehen, werden mit der Bodengruppe in Wagenlängsrichtung zusammengeklebt, so daß sie beim Zusammenfalten des Containers auf die Bodengruppe von beiden Seiten zugeklappt werden.

Die beiden Komponenten des Aufbauteils (3.1; 3.2), die auf die Seitenteile (2.1; 2.2) aufgesetzt werden, werden miteinander an der Mittelachse der Decke des Laderaums sowie unten mit den beiden Seitenteilen in Wagenlängsrichtung zusammengeklebt. Sie sind an der Mittelachse der Decke faltbar. Der Aufbauteil bedeckt im Einsatzzustand die Innenwände, die oberhalb der Seitenteile übrig bleiben und die gesamte Decke des Fahrzeugladeraums. Beim Zusammenfalten des Containers fällt der Aufbauteil, an der Mittelachse der Decke zusammengeklappt, mit seinen Komponenten auf einen der Seitenteile, die bereits symmetrisch auf der Bodengruppe liegen, wobei sich die gemeinsamen Kanten zwischen dem Aufbauteil und den Seitenteilen (2.1 / 3.1; 2.2 / 3.2) an der Mittelachse der Bodengruppe von links und rechts kommend begegnen während die Mittelachse des Aufbauteils nach außen tendiert, wo die beiden gemeinsamen Kanten zwischen der Bodengruppe und den Seitenteilen (1.1 / 2.1; 1.2 / 2.2) zusammenkommen.

Um die Berührung der gemeinsamen Kanten - Seitenteile, Aufbauteile (2.1 / 3.1; 2.2 / 3.2) - an der Mittelachse der Bodengruppe zu vermeiden und Freiraum für ein komfortables Zusammenfalten des Containers um die Mittelachse der Bodengruppe zu schaffen, haben die Seitenteile eine Höhe, die um einige cm kürzer ist als die Breite der Komponenten der Bodengruppen.

Weil alle Teile, auch die Komponenten des Aufbauteils (3.1; 3.2) miteinander in der Wagenlängsrichtung zusammengeklebt sind, entsteht aufgrund der bisherigen Ausführungen ein Container, der im aufgebauten Zustand die Form eines Tunnels annimmt. Eine Klappe, die die vordere Öffnung des Tunnels auf der Fahrerseite schließt, besteht aus zwei Komponenten (4.1; 4.2). Die Klappenteile (4.1; 4.2) weisen die selbe Breite auf wie die beiden Teile der Bodengruppe (1.1; 1.2) und sind in der Mitte zusammengeklebt, so daß sie faltbar sind. Diese Klappe ist mit der Bodengruppe quer zur Wagenlängsrichtung zusammengeklebt, so daß sie auf die Bodengruppe heruntergeklappt werden kann. Die Klappenteile (4.1; 4.2) sind außerdem seitlich mit den Seitenflügeln (5.1; 5.2) und oben mit den oberen Flügeln (5.3; 5.4) verbunden. Die Flügel können auf die Klappe zusammengeklappt werden . Die Flügel werden mit dem Tunnel mittels Klettbänder oder vergleichbarer Techniken flexibel verbunden.

Die Öffnung des Tunnels zum Beladen des Fahrzeugs wird mit einer ähnlichen zweiteiligen Klappe (4.3; 4.4) zugemacht wie die Klappe auf der Vorderseite des Tunnels, mit dem Unterschied, daß sie keine Flügel zu besitzen braucht. Die Verbindung dieser Klappe mit dem Tunnel, je nach Anforderung, kann fest oder flexibel gestaltet werden, so daß im Bedarfsfalle die Klappe abgenommen und nach Beladen des Fahrzeugs wieder befestigt werden kann.

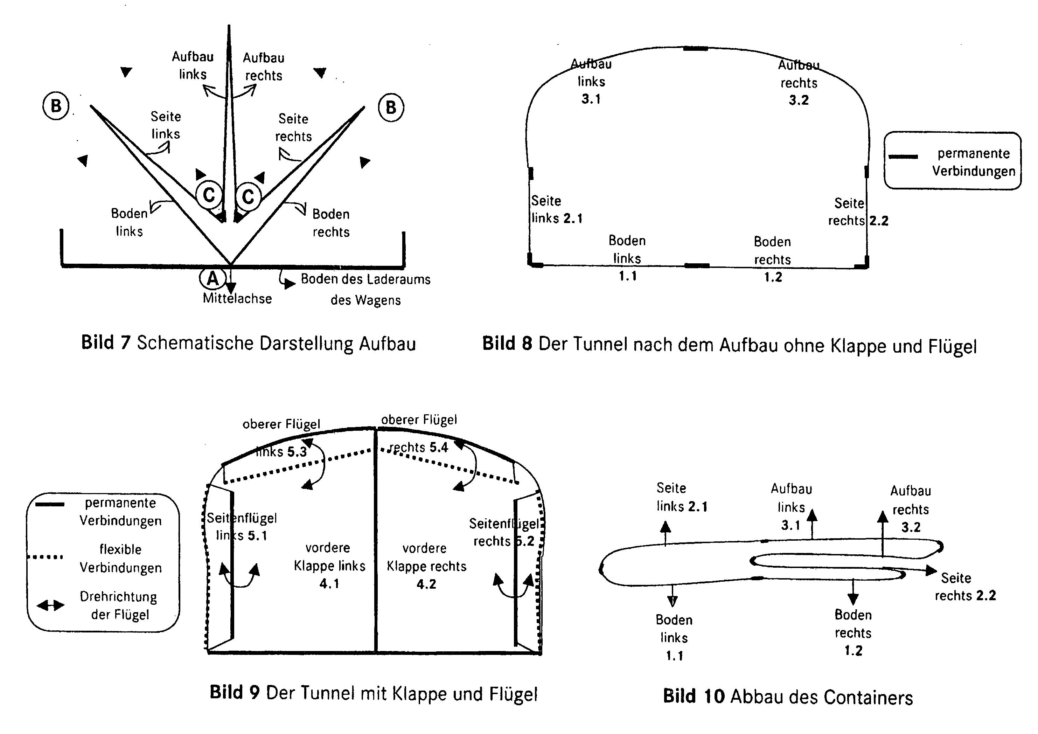

Container in den Einsatzzustand versetzen: Der zusammengefaltete Container wird mit der Mittelachse der Bodengruppe auf die Mittelachse des Bodens des Laderaums aufgelegt (Bild 7 A ) und aufgeklappt B . Von innen heraus werden die rechten und linken Seiten- und Aufbauteile an der gemeinsamen Kante hinausgedrückt C , so daß sie sich auf die Wageninnenwände bzw.-decken pressen. Nach der Durchführung dieser Operation entsteht im Wageninnern ein Tunnel (Bild 8) . Die zweiteilige vordere Klappe mit den Seitenund Oberflügeln, die noch auf der Bodengruppe liegt, wird hochgeklappt. Die Seiten- und Oberflügel werden aufgemacht und mit dem Tunnel befestigt (Bild 9). Nun ist der Container aufgebaut und der Wagen steht bereit, beladen zu werden. Nach Beendigung des Ladevorgangs wird die hintere Klappe hochgeklappt und der Container zugemacht.

Container abbauen: Der Abbau erfolgt genau in umgekehrter Reihenfolge wie der Aufbau.

## Patentansprüche

1. Vorrichtung zum Umrüsten eines Fahrzeuginnenraums für den Transport von Gütern bestehend aus einer Verkleidung, die einen Boden und Seitenteile umfasst und zusammenfaltbar ist, wobei die Seitenteile im Einsatzzustand der Verkleidung etwa senkrecht zum Boden stehen, und
ein Dachhimmel der Verkleidung (3.1, 3.2) mit zwei Seitenteilen (2.1, 2.2) verbunden ist, **dadurch gekennzeichnet, daß** sich die Seitenteile (2.1, 2.2) und der Dachhimmel (3.1, 3.2) im Einsatzzustand der Verkleidung unter Nutzung der Federkraft und Steifigkeit des Verkleidungsmaterials an die Dunenwände, den Boden und die Decke des Fahrzeugs anpreßt.

2. Vorrichtung nach Anspruch 1,
**dadurch gekennzeichnet,**
**dass** die Federkraft des Verkleidungsmaterials durch Anbringung des Verkleidungsmaterials unter Spannung erzeugt ist.

3. Vorrichtung nach Anspruch 1,
**dadurch gekennzeichnet,**
**dass** die Verkleidung aus demontierbaren Komponenten besteht.

4. Vorrichtung nach Anspruch 1,
**dadurch gekennzeichnet,**
**dass** die Verkleidung aus permanent zusammengesetzten Komponenten besteht.

5. Vorrichtung nach Anspruch 5,
**dadurch gekennzeichnet,**
**dass** die Verkleidung aus einem zusammenfaltbaren und ausklappbaren Teil besteht.

6. Vorrichtung nach Anspruch 1,
**dadurch gekennzeichnet,**
**dass** das Verkleidungsmaterial aus mit Folien kaschiertem Schaumstoff besteht.

7. Vorrichtung nach Anspruch 1,
**dadurch gekennzeichnet,**
**dass** die Verkleidung aus zumindest zwei Komponenten besteht, die miteinander verbunden sind.

8. Vorrichtung nach Anspruch 1,
**dadurch gekennzeichnet,**
**dass** eine erste Hauptkomponente einen Boden (1.1, 1.2), zwei Seitenteile (2.1, 2.2), eine vordere Klappe (4,1, 4.2) und eine hintere Klappe beinhaltet.

9. Vorrichtung nach Anspruch 1,
**dadurch gekennzeichnet,**
**dass** eine zweite Hauptkomponente einen Dachhimmel (3.1, 3.2) mit angrenzende Seitenteilen beinhaltet.

## Claims

1. A device for the conversion of the interior space of a vehicle for the transportation of goods, having a liner, which comprises a floor and side parts and can be folded up, the side parts being approximately perpendicular to the floor in the position of use of the liner, and a roof lining (3.1, 3.2) is connected to the two side parts (2.1, 2.2),
wherein,
the side parts (2.1, 2.2) and the roof lining (3.1, 3.2) being pressed against the interior contours of the vehicle in the position of use of the liner by utilizing the resilience and rigidity of the liner material.

2. The device as claimed in claim 1,
wherein,
the resilience of the liner material is generated by placing the liner material under tension.

3. The device as claimed in claim 1,
wherein,
the liner consists of components that can be dismantled.

4. The device as claimed in claim 1,
wherein,
the liner consists of permanently assembled components.

5. The device as claimed in claim 5,
wherein,
the liner consists of one part that can be folded together and swung out.

6. The device as claimed in claim 1,
wherein,
the liner material consists of film-laminated foam.

7. The device as claimed in claim 1,
wherein,
the liner consists of at least two components which are connected to one another.

8. The device as claimed in claim 1,
wherein,
a first principal component comprises a floor (1.1, 1.2), two side parts (2.1, 2.2), a front flap (4,1, 4.2) and a rear flap.

9. The device as claimed in claim 1,
wherein,
a second principal component comprises a roof lining (3.1, 3.2) with adjoining side parts.

## Revendications

1. Dispositif permettant d'équiper l'intérieur d'un véhicule pour le transport de marchandises et composé d'un habillage pliable comprenant un plancher et des pièces latérales, ces dernières étant à peu près verticales par rapport au plancher lorsque l'habillage est en position montée pour utilisation, avec un ciel de pavillon (3.1, 3.2) relié aux pièces latérales (2.1, 2.2),
**caractérisé par le fait que**
lorsque l'habillage est en position montée pour utilisation, les pièces latérales (2.1, 2.2) et le ciel de pavillon (3.1, 3.2), en exploitant l'élasticité et la rigidité du matériau d'habillage, sont pressés contre les parois intérieures, le plancher et le plafond du véhicule.

2. Dispositif selon la revendication 1,
**caractérisé par le fait que**
l'élasticité du matériau d'habillage est créée par la tension de ce matériau lors de sa mise en place.

3. Dispositif selon la revendication 1,
**caractérisé par le fait que**
l'habillage est constitué de composants démontables.

4. Dispositif selon la revendication 1,
**caractérisé par le fait que**
l'habillage est constitué de composants restant assemblés en permanence.

5. Dispositif selon la revendication 5,
**caractérisé par le fait que**
l'habillage est une pièce pouvant être pliée et déployée.

6. Dispositif selon la revendication 1,
**caractérisé par le fait que**
le matériau de l'habillage consiste en une mousse recouverte de films.

7. Dispositif selon la revendication 1,
**caractérisé par le fait que**
l'habillage est constitué d'au moins deux composants reliés entre eux.

8. Dispositif selon la revendication 1,
**caractérisé par le fait que**
un premier ensemble principal se compose d'un plancher (1.1, 1.2), de deux pièces latérales (2.1, 2.2), d'un volet avant (4,1, 4.2) et d'un volet arrière.

9. Dispositif selon la revendication 1,
**caractérisé par le fait que**
un deuxième ensemble principal se compose d'un ciel de pavillon (3.1, 3.2) avec pièces latérales adjacentes.
